# EUROPEAN PATENT SPECIFICATION

(11) **EP 2 844 542 B1**
(45) Date of publication and mention of the grant of the patent: **27.07.2016**
(21) Application number: 13723997.6
(22) Date of filing: 29.04.2013
(51) Int. Cl.: B63B 21/02

(54) **MOORING DEVICE FOR MOORING A SHIP**
ANLEGEVORRICHTUNG ZUM ANLEGEN VON SCHIFFE
DISPOSITIF D'AMARRAGE POUR AMARRER D'UN NAVIRE

(30) Priority: 03.05.2012 NL 2008746
(43) Date of publication of application: 11.03.2015
(73) Proprietor: European Intelligence B.V., 3316 BP Dordrecht (NL)
(72) Inventor: BOERLEIDER, Johan, Marlon, NL-3316 BP Dordrecht (NL); MAMPAEIJ, Gerardus Antonius Jozef, NL-3316 BP Dordrecht (NL); LEENDERS, Constantinus Wilhelmus, NL-2513 BE Den Haag (NL); VAN REENEN, Wouter, NL-3033 XP Rotterdam (NL)
(74) Representative: Van Breda, Jacobus
(86) International application number: PCT/NL2013/050321
(87) International publication number: WO 2013/165239

(56) References cited:
- WO-A1-2010/053368
- DE-A1- 1 911 949
- DE-B- 1 129 081
- NL-A- 8 600 973
- US-A1- 2007 084 395

## Description

The invention relates to a mooring device for mooring a ship and comprises a base, a movable arm construction supported by the base, and at least one magnet mounted in a frame, which frame is supported by the movable arm construction, wherein the frame is with a hinge connected to the movable arm construction.

Such a mooring device is known from WO2010/053368. According to this citation the mooring device is placed ashore and is used for moving the magnet to the ship's hull and mounting the ship to the quayside. According to one of the aspects of the invention the mooring device can however also be mounted on the ship, wherein the magnet is connected to a magnetizable fixture onshore. The mooring device can also be used for connecting one ship to another ship. The magnet to be employed can be either permanent, semipermanent or it can be an electromagnet.

Although the mooring device known from WO2010/053368 is devised to be flexible with a view that the surface of the ship's hull need not be perfectly perpendicular to the mooring magnet surface to take care of the fact that most ship hulls are by nature of non-planar design, it is found that the degree of flexibility achieved with the known mooring device is insufficient in real life. It is therefore a first object of the invention to improve the known mooring device. Secondly it is an object of the invention to accommodate the mooring device to higher degrees of irregularity in the ship's hull than is possible with the prior art mooring device. The third objective of the invention is to provide a mooring device which is easier to handle and which has improved versatility in its use. These and other objectives will become apparent from the following disclosure of the invention.

The mooring device of the invention and/or a ship provided with such a mooring device has the features of one or more of the appended claims.

According to a first aspect of the invention the frame comprises two beams on opposite sides of the hinge, and each beam supports at least one leaf spring and a magnet mounted on said at least one leaf spring. By providing the beams on opposite sides of the hinge a balanced construction is possible which supports the ease of handling of the mooring device, wherein the leaf spring or leaf springs enable that the magnet or magnets supported thereby can easily accommodate to the curvature of the ship's hull.

To further support the ease of handling by providing a balanced construction, it is preferred that each beam is provided with two leaf springs, wherein each leaf spring supports a magnet, and said two leaf springs are provided on opposite sides of the beam.

A very noteworthy aspect of the invention is that for each leaf spring the magnet or magnets mounted thereon connect to the leaf spring at a position distant from the beam. Quite surprisingly this increases not only the flexibility in moves that the magnet can make with reference to the frame in three degrees of freedom of a coordinate system, but it also arranges that the preferential movement direction of the magnets is perpendicular to the frame and consequently also perpendicular to the ship's hull to which the magnets must be applied. It goes without saying that this is very beneficial for connecting the magnets to the ship's hull whilst avoiding that part of the magnets might acquire incomplete contact with the hull.

The mooring device of the invention is suitably arranged such that each beam is embodied as an H-beam, wherein the leaf spring or leaf springs connect to one leg of the H-beam at a backside of the magnet or magnets so as to arrange that in a rest position a front side of the magnet or magnets can be substantially flush with an opposite leg of the H-beam. This provides a suitably balanced construction, which again supports the ease of handling of the mooring device.

It is also preferred that the frame is provided with a counterweight or counterweights so as to provide the magnet or magnets mounted to the frame with a preferential orientation in a vertical plane with reference to the hinge.

In still another aspect of the invention the hinge is embodied as a ball and socket joint. Making use of such a ball and socket joint is beneficial for the manoeuvrability of the frame with the magnets with reference to the movable arm construction to which the frame connects.

Is preferred that the ball and socket joint connects at a central point of the frame so as to arrange that the frame is mirror symmetric left and right of the movable arm construction supporting the frame.

The invention will hereinafter be further elucidated with reference to the drawing of a schematic representation of a single mooring device according to the invention.

In the drawing:
- figure 1 shows the mooring device of the invention in a perspective view;
- figure 2 shows the frame with the magnets of the mooring device of the invention; and
- figure 3 shows in a detailed view the ball and socket joint with which the frame is mounted to the movable arm construction of the mooring device of the invention.

Wherever in the figures the same reference numerals are applied, these numerals refer to the same parts.

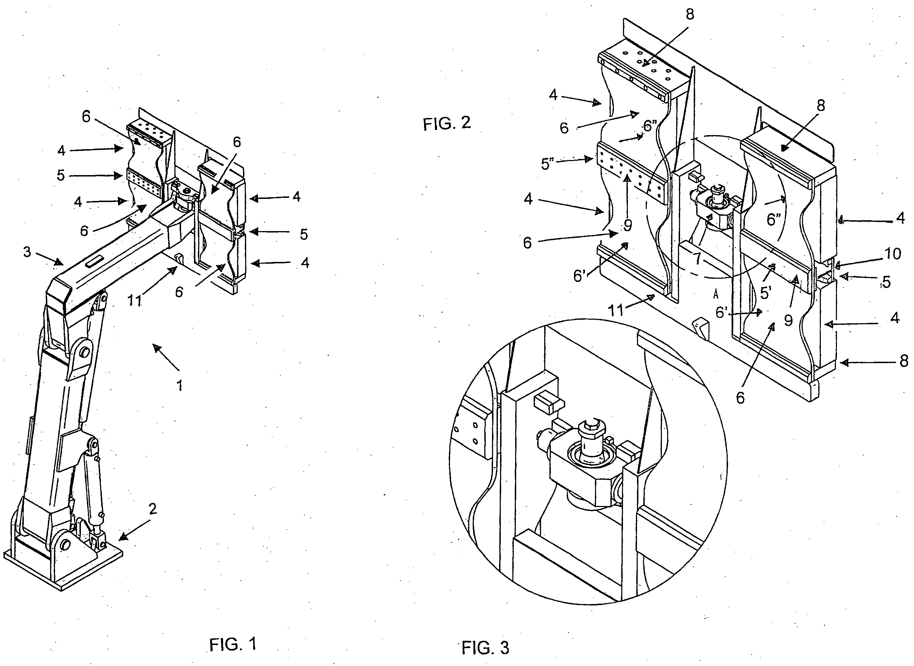

With reference first to figure 1, the mooring device 1 of the invention is shown in a perspective view. This mooring device 1 for mooring a ship comprises a base 2, a movable arm construction 3 supported by the base 2, and at least one but in practice usually several magnets 4 mounted in a frame 5. The frame 5 is supported by the movable arm construction 3. Figure 2 clearly shows that the frame 5 is connected to the movable arm construction 3 with an intermediate hinge 7.

According to the invention the frame 5 is provided with at least one but usually several leaf springs 6, wherein each magnet 4 is supported by one of the leaf springs 6. This is also shown in figure 2.

The detail of figure 3 shows that the intermediate hinge 7 is embodied as a ball and socket joint. Figure 2 clearly shows that the frame 5 comprises two beams 5', 5" on opposite sides of the hinge 7, and that each beam 5', 5" supports two leaf springs 6', 6", wherein each leaf spring 6', 6" supports a magnet 4, and said two leaf springs 6', 6" are provided on opposite sides of the beam 5.

Again referring to figure 2 it is shown that for each leaf spring 6', 6" the magnet or magnets 4 mounted thereon connect to the leaf spring 6', 6" with a constructional element 8 at a position distant from the beam 5. Figure 2 also shows that each beam 5 is embodied as an H-beam, wherein the leaf spring or leaf springs 6', 6" connect to one leg ,9 of the H-beam at a backside of the magnet or magnets 4 so as to arrange that in a rest position of the mooring device 1 a front side of the magnet or magnets 4 can be substantially flush with an opposite leg 10 of the H-beam.

Both figure 1 and figure 2 show that the frame 5 is provided with a counterweight 11 or counterweights so as to provide the magnet or magnets 4 mounted to the frame 5 with a preferential orientation in a vertical plane with reference to the hinge 7. This ensures that the surface of the magnets or magnets 4 can be oriented perfectly parallel with respect to the ship's hull or other fixture to which it will connect, which will provide optimal mooring results.

Finally it is remarked that from figure 1 it is clear that the ball and socket joint 7 connects at a central point of the frame 5 so as to arrange that the frame 5 is mirror symmetric left and right of the movable arm construction 3 supporting the frame 5.

As remarked above the mooring device of the invention may be placed ashore to connect to a ship's hull for mooring purposes. According to the invention it is however also possible to provide a ship with one or more mooring devices according to the invention.

The appended claims provide the scope of protection of the instant invention, whereas the foregoing description is intended merely to elucidate any ambiguity that may possibly reside in these claims without the intent to limit the claims to the specific embodiment that has been discussed with reference to the drawing. The scope of protection that merits the invention is therefore solely defined by the appended claims and the construction of these claims should be as broad as is warranted by the invention in view of its contribution to the prior art.

## Claims

1. Mooring device (1) for mooring a ship and comprising a base (2), a movable arm construction (3) supported by the base (2), and at least one magnet (4) mounted in a frame (5), which frame (5) is supported by the movable arm construction (3), wherein the frame (5) is with a hinge (7) connected to the movable arm construction (3), **characterized in that** the frame (5) comprises two beams (5', 5") on opposite sides of the hinge (7), and that each beam (5', 5") supports at least one leaf spring (6) and a magnet (4) mounted on said at least one leaf spring (6).

2. Mooring device (1) according to claim 1, **characterized in that** each beam (5', 5") is provided with two leaf springs (6', 6"), wherein each leaf spring (6', 6") supports a magnet (4), and said two leaf springs (6', 6") are provided on opposite sides of the beam (5).

3. Mooring device (1) according to claim 1 or 2, **characterized in that** for each leaf spring (6', 6") the magnet or magnets (4) mounted thereon connect to the leaf spring (6', 6") at a position distant from the beam (5', 5").

4. Mooring device (1) according to any one of the previous claims, **characterized in that** each beam (5', 5" is embodied as an H-beam, wherein the leaf spring or leaf springs (6', 6") connect to one leg (9) of the H-beam at a backside of the magnet or magnets (4) so as to arrange that in a rest position a front side of the magnet or magnets (4) can be substantially flush with an opposite leg (10) of the H-beam.

5. Mooring device (1) according to any one of the previous claims, **characterized in that** the frame (5) is provided with a counterweight (11) or counterweights so as to provide the magnet or magnets (4) mounted to the frame (5) with a preferential orientation in a vertical plane with reference to the hinge (7).

6. Mooring device (1) according to any one of the previous claims 1-5, **characterized in that** the hinge (7) is embodied as a ball and socket joint.

7. Mooring device (1) according to claim 6, **characterized in that** the ball and socket joint (7) connects at a central point of the frame (5) so as to arrange that the frame (5) is mirror symmetric left and right of the movable arm construction (3) supporting the frame.

8. Ship provided with one or more mooring devices according to any one of the previous claims 1-7.

## Patentansprüche

1. Anlegevorrichtung (1) zum Anlegen eines Schiffes, aufweisend eine Basis (2), eine bewegliche Armkonstruktion (3), welche durch die Basis (2) getragen wird, und zumindest einen Magneten (4), welcher in einen Rahmen (5) gelagert ist, wobei der Rahmen (5) durch die bewegliche Armkonstruktion (3) getragen wird, wobei der Rahmen (5) mit einem Gelenk (7) mit der beweglichen Armkonstruktion (3) verbunden ist, **dadurch gekennzeichnet, dass** der Rahmen (5) zwei Balken (5', 5") an gegenüberliegenden Seiten des Gelenkes (7) aufweist, und dass jeder Balken (5, 5") zumindest eine Blattfeder (6) trägt, und ein Magnet (4) auf der zumindest einen Blattfeder (6) gelagert ist.

2. Anlegevorrichtung (1) gemäß Anspruch 1, **dadurch gekennzeichnet, dass** jeder Balken (5', 5") mit zwei Blattfedern (6', 6") versehen ist, wobei jede Blattfeder (6', 6") einen Magneten (4) trägt, und die zwei Blattfedern (6', 6") auf gegenüberliegenden Seiten des Balkens (5) zur Verfügung gestellt sind.

3. Anlegevorrichtung (1) gemäß Anspruch 1 oder 2, **dadurch gekennzeichnet, dass** bei jeder Blattfeder (6', 6") der Magnet oder die Magnete (4), welche darauf gelagert sind, mit der Blattfeder (6', 6") an einer Position distanziert von dem Balken (5', 5") verbunden sind.

4. Anlegevorrichtung (1) gemäß irgendeinem der vorherigen Ansprüche, **dadurch gekennzeichnet, dass** jeder Balken (5', 5") als ein H-Balken ausgestaltet ist, wobei die Blattfeder oder die Blattfedern (6', 6") zu einem Bein (9) des H-Balkens an einer Rückseite des Magneten oder der Magnete (4) derart verbunden sind, dass in einer Ruheposition eine Vorderseite des Magneten oder der Magnete (4) im Wesentlichen fluchtend angeordnet sein kann mit einem gegenüberliegenden Bein (10) des H-Balkens.

5. Anlegevorrichtung (1) gemäß irgendeinem der vorhergehenden Ansprüche, **dadurch gekennzeichnet, dass** der Rahmen (5) mit einem Gegengewicht (11) oder Gegengewichten derart versehen ist, um den Magneten oder die Magnete (4), welche auf dem Rahmen (5) gelagert sind, mit einer bevorzugten Ausrichtung in einer Vertikalebene mit Bezug auf das Gelenk (7) zu versehen.

6. Anlegevorrichtung (1) gemäß irgendeinem der vorhergehenden Ansprüche 1 - 5, **dadurch gekennzeichnet, dass** das Gelenk (7) als ein Kugelgelenk ausgestaltet ist.

7. Anlegevorrichtung (1) gemäß Anspruch 6, **dadurch gekennzeichnet, dass** das Kugelgelenk (7) einen zentralen Punkt des Rahmens (5) derart verbindet, um den Rahmen (5) spiegelsymmetrisch links und rechts der beweglichen Armkonstruktion (3), welche den Rahmen trägt, anzuordnen.

8. Schiff, welches mit einer oder mehreren Anlegevorrichtungen gemäß irgendeinem der vorherigen Ansprüche 1 bis 7 versehen ist.

## Revendications

1. Dispositif d'amarrage (1) pour amarrer un bateau et comprenant une base (2), une structure de bras mobile (3) supportée par la base (2), et au moins un aimant (4) monté dans un châssis (5), lequel châssis (5) est supporté par la structure de bras mobile (3), le châssis (5) comportant une articulation (7) raccordée à la structure de bras mobile (3), **caractérisé en ce que** le châssis (5) comprend deux poutrelles (5', 5") sur des côtés opposés de l'articulation (7), et **en ce que** chaque poutrelle (5', 5") supporte au moins un ressort à lames (6) et un aimant (4) monté sur ledit au moins un ressort à lames (6).

2. Dispositif d'amarrage (1) selon la revendication 1, **caractérisé en ce que** chaque poutrelle (5', 5") est dotée de deux ressorts à lames (6', 6"), chaque ressort à lames (6', 6") supportant un aimant (4), et lesdits deux ressorts à lames (6', 6") étant situés sur des côtés opposés de la poutrelle (5).

3. Dispositif d'amarrage (1) selon la revendication 1 ou 2, **caractérisé en ce que**, pour chaque ressort à lames (6', 6"), l'aimant ou les aimants (4) montés dessus se raccordent au ressort à lames (6', 6") en une position distante de la poutrelle (5', 5").

4. Dispositif d'amarrage (1) selon l'une quelconque des revendications précédentes, **caractérisé en ce que** chaque poutrelle (5', 5") est réalisée sous la forme d'une poutrelle en H, le ou les ressorts à lames (6', 6") se raccordant à un jambage (9) de la poutrelle en H en une face postérieure de l'aimant ou des aimants (4) afin que, dans une position de repos, une face avant de l'aimant ou des aimants (4) puisse être sensiblement au même niveau qu'un jambage opposé (10) de la poutrelle en H.

5. Dispositif d'amarrage (1) selon l'une quelconque des revendications précédentes, **caractérisé en ce que** le châssis (5) est doté d'un ou plusieurs contrepoids (11) de manière que l'aimant ou les aimants (4) montés sur le châssis (5) aient une orientation préférentielle dans un plan vertical relativement à l'articulation (7).

6. Dispositif d'amarrage (1) selon l'une quelconque des revendications précédentes 1 à 5, **caractérisé en ce que** l'articulation (7) est réalisée sous la forme d'un joint à rotule.

7. Dispositif d'amarrage (1) selon la revendication 6, **caractérisé en ce que** le joint à rotule (7) se raccorde en un point central du châssis (5) de manière que le châssis (5) soit en symétrie spéculaire sur la gauche et la droite de la structure de bras mobile (3) supportant le châssis.

8. Bateau doté d'un ou plusieurs dispositifs d'amarrage selon l'une quelconque des revendications 1 à 7.
